# EUROPÄISCHE PATENTANMELDUNG

(11) **EP 4 826 986 A1**
(43) Veröffentlichungstag der Anmeldung: **21.10.2026**
(21) Anmeldenummer: 26172285.4
(22) Anmeldetag: 14.04.2026
(51) Int. Cl.: H02P 3/14, E05F 15/60, H02P 7/03

(54) **STEUERUNGSVORRICHTUNG FÜR EINEN ELEKTROMECHANISCHEN ANTRIEB ZUM BETÄTIGEN EINES ÖFFNUNGSELEMENTS EINES GEBÄUDES**

(30) Priorität: 15.04.2025 DE 102025114764
(71) Anmelder: GEZE GmbH, 71229 Leonberg (DE)
(72) Erfinder: Banucu, Remus, 75328 Schömberg (DE); Späth, Markus, 71032 Böblingen (DE); Egorenkov, Sergej, 70437 Stuttgart (DE)
(74) Vertreter: Witte, Weller & Partner Patentanwälte mbB

(57) **Zusammenfassung**

Die Erfindung betrifft eine Steuerungsvorrichtung für einen elektromechanischen Antrieb zum Betätigen eines Öffnungselements insbesondere eines Gebäudes, mit einer Schalteinrichtung (34), die ausgelegt ist, einen elektrischen Motor (12) des elektromechanischen Antriebs in einem Antriebsmodus mit Energie zu versorgen, einer Steuereinheit (32) zur Steuerung der Schalteinrichtung (34); und einer Speichereinrichtung (36) mit einem Speicherelement (38) zum Speichern elektrischer Energie, die zur Versorgung der Steuereinheit (32) in einem Notfallbetrieb dient, Die Erfindung ist dadurch gekennzeichnet, dass die Steuereinheit (32) ausgelegt ist, die Schalteinrichtung (34) so anzusteuern, dass der elektrische Motor (12) auch in einem Generatormodus zur Energierückgewinnung und/oder Bremsung betreibbar ist, und die Schalteinrichtung (34) ausgelegt ist, die im Generatormodus vom Motor (12) erzeugte Energie zumindest teilweise dem Speicherelement (38) zum Laden zuzuführen. Ferner betrifft die Erfindung ein Verfahren zum Steuern eines elektromechanischen Antriebs sowie einen elektromechanischen Antrieb.

## Beschreibung

Die Erfindung betrifft eine Steuerungsvorrichtung für einen elektromechanischen Antrieb zum Betätigen eines Öffnungselements, insbesondere eines Gebäudes, mit einer Schalteinrichtung, die ausgelegt ist, einen elektrischen Motor des elektromechanischen Antriebs in einem Antriebsmodus mit Energie zu versorgen, einer Steuereinheit zur Steuerung der Schalteinrichtung, und einer Speichereinrichtung mit einem Speicherelement zum Speichern elektrischer Energie, die zur Versorgung der Steuereinheit in einem Notfallbetrieb dient. Ferner betrifft die Erfindung ein Verfahren zum Steuern eines elektromechanischen Antriebs zum Betätigen eines Öffnungselements, insbesondere eines Gebäudes, und einen elektromechanischen Antrieb zum Betätigen eines Öffnungselements, insbesondere eines Gebäudes.

Allgemein werden elektromechanische Türantriebe eingesetzt, um Türen, d.h. einen Flügel einer Tür, automatisiert zu öffnen und zu schließen. Sie bestehen in der Regel aus einem Elektromotor, einer mechanischen Kraftübertragungseinrichtung und einer Steuerungseinheit, die den Betrieb des Motors in Abhängigkeit von externen Signalen oder vordefinierten Parametern steuert. Während des Öffnungsvorgangs wird der Motor durch eine externe Energiequelle mit elektrischer Energie versorgt und treibt den Türflügel (nachfolgend kurz Flügel genannt) in die Offenstellung. Dabei kann die Bewegung über ein Getriebe und/oder eine Hebelmechanik auf den Flügel übertragen werden, sodass eine kontrollierte Bewegung erfolgt.

Neben dem Antriebsmodus verfügen viele dieser Türantriebe über einen Bremsmodus, der aktiv oder passiv die Schließbewegung steuert oder regelt. In modernen Systemen wird hierfür der Elektromotor selbst als Generator eingesetzt. Während der Schließbewegung dreht sich die Motorwelle aufgrund der kinetischen Energie des Flügels, wodurch eine elektrische Spannung im Motor induziert wird. Diese erzeugte Energie kann durch gezielte Steuerung der elektrischen Schaltung zur Bremsung der Bewegung genutzt werden, indem sie bspw. durch einen Widerstand geführt und in Wärme umgesetzt wird.

Die Steuerungsvorrichtung eines solchen Antriebs übernimmt die Aufgabe, den Motor im Antriebsmodus mit Energie zu versorgen sowie die Drehzahl des Motors zu steuern oder zu regeln und gleichzeitig im Bremsmodus bzw. Generatormodus eine kontrollierte Verzögerung der Bewegung zu gewährleisten. Dazu ist sie mit einer Schalteinrichtung ausgestattet, die den Energiefluss zwischen der Energiequelle, dem Motor und gegebenenfalls einem Speicherelement regelt. Jeweilige Steuerungen ermöglichen dabei die Umschaltung zwischen Antriebs- und Bremsmodus sowie die gezielte Anpassung der Bremswirkung an verschiedene Betriebszustände, beispielsweise um ein abruptes Stoppen der Tür zu verhindern oder die Schließgeschwindigkeit zu steuern oder zu regeln. Zudem ist es möglich, die durch den Generatorbetrieb erzeugte Energie weiterzuverwenden, beispielsweise zur Speisung einer Notfallsteuerung oder zur Verlängerung der Betriebsdauer in einem energieautarken System.

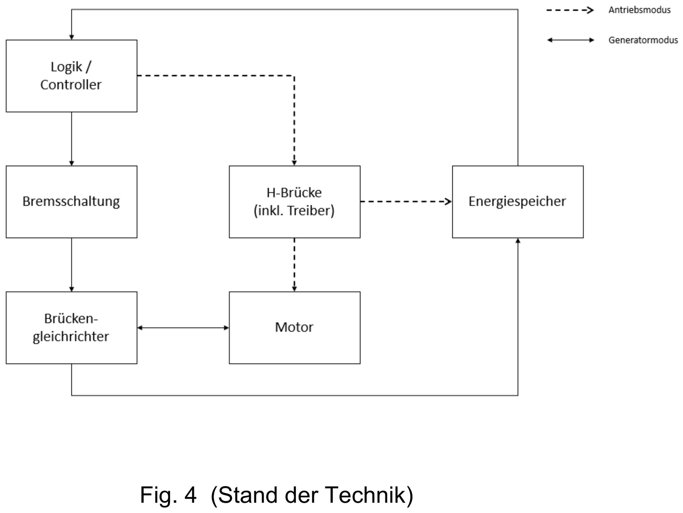

Aus der DE 10 2015 200 289 A1 ist eine Steuerung für einen elektromechanischen Antrieb bekannt, die für das Betätigen eines beweglichen Flügels vorgesehen ist. Die Steuerung umfasst eine Motor-Generator-Einheit, die sowohl zum Antreiben als auch zum Bremsen des Flügels genutzt wird. Dabei sind jedoch zwei separate Schaltungsteile vorgesehen, von denen der erste Schaltungsteil im Antriebsmodus arbeitet und den Motor mit Energie versorgt, während der zweite Schaltungsteil im Generatormodus eine Bremswirkung einstellt und die im Generatormodus erzeugte elektrische Energie in einem Speicherelement, beispielsweise einem Kondensator, speichert. Diese Aufteilung in zwei getrennte Steuerungskreise führt zu einem erhöhten Schaltungsaufwand und erfordert eine komplexe Koordination zwischen den beiden Betriebsmodi. Insbesondere ist die Energieeinspeicherung in dem Speicherelement nur im Generatormodus möglich, sodass eine kontinuierliche Energierückgewinnung im Antriebsmodus nicht vorgesehen ist. Eine schematische Darstellung der Trennung von Antriebssteuerung und Bremssteuerung ist in Figur 4 schematisch dargestellt.

Diese bekannte Steuerung, obgleich sie sich in der Praxis bewährt hat, weist verschiedene Nachteile auf. Zum einen erfordert sie einen komplexen Aufbau mit zwei getrennten Schaltungsteilen, wodurch sich der Bauraum- und Kostenaufwand erhöht und die Steuerung der Umschaltung zwischen den Betriebsmodi zusätzlich erschwert wird. Zum anderen ist die Energierückgewinnung auf den Generatormodus beschränkt, sodass die Nutzung der erzeugten Energie nicht optimiert ist. Darüber hinaus ist im Generatormodus eine separate Schaltung erforderlich, um die Bremswirkung zu regulieren, was den Steuerungs- und Implementierungsaufwand weiter steigert.

In der DE 10 2017 201 942 A1 wird eine Steuerung für einen elektromechanischen Antrieb beschrieben, die eine H-Brücke zur Ansteuerung eines Elektromotors sowohl im Antriebs- als auch im Generatormodus nutzt. Die H-Brücke ermöglicht die Umschaltung zwischen diesen beiden Betriebsarten, sodass der Motor im Antriebsmodus mit Energie versorgt wird und im Generatormodus zur Bremsung des Türflügels dient. Die Steuer- und Regelelektronik ermöglicht dabei die gezielte Steuerung der Bremswirkung durch eine Anpassung des Kurzschlussstroms über die H-Brücke.

Obwohl diese Lösung die Nutzung der gleichen Schaltung für beide Betriebsmodi erlaubt, weist sie dennoch einige Nachteile auf. Insbesondere fehlt eine Möglichkeit zur Speicherung der im Generatormodus erzeugten Energie, sodass die gewonnene elektrische Energie ungenutzt bleibt. Dies führt dazu, dass die Steuerung des Motors im Notfall vollständig auf eine externe Energieversorgung angewiesen ist und nicht autark betrieben werden kann. Zudem bedeutet der Verzicht auf eine Speichereinrichtung, dass keine kontinuierliche Energierückgewinnung erfolgt und die Steuerung nicht aus einer gespeicherten Energiequelle versorgt werden kann, was in Notfallsituationen, beispielsweise bei einem Stromausfall, nachteilig ist. Eine zusätzliche externe Energieversorgung für Notfälle erhöht außerdem den Installationsaufwand und die Abhängigkeit von zusätzlichen Komponenten.

Es ist daher die Aufgabe der Erfindung, eine vereinfachte Steuerungsvorrichtung für einen elektromechanischen Antrieb bereitzustellen, die mit reduziertem Schaltungsaufwand auskommt, die Umschaltung zwischen Motor- und Generatorbetrieb effizient gestaltet und eine optimierte Energierückgewinnung und Speicherung ermöglicht.

Diese Aufgabe wird durch eine Steuerungsvorrichtung für einen elektromechanischen Antrieb gelöst, die eine Schalteinrichtung umfasst, die den elektrischen Motor im Antriebsmodus mit Energie versorgt, sowie eine Steuereinheit zur Steuerung der Schalteinrichtung und eine Speichereinrichtung mit einem Speicherelement, das elektrische Energie speichert und zur Notfallversorgung der Steuereinheit dient. Erfindungsgemäß ist die Steuereinheit so ausgelegt, dass sie die Schalteinrichtung so ansteuert, dass der elektrische Motor auch im Generatormodus zur Energierückgewinnung und/oder Bremsung betrieben werden kann, wobei die Schalteinrichtung die im Generatormodus erzeugte Energie zumindest teilweise zum Laden des Speicherelements verwendet.

Durch diese Lösung wird der gesamte Steuerungsaufwand erheblich reduziert, da keine separate Bremsschaltung oder Steuerungseinheit für den Generatormodus erforderlich ist. Der Antrieb kann flexibel zwischen Antriebs- und Generatormodus wechseln, ohne dass separate Schaltungsteile für beide Betriebsarten notwendig sind. Zudem wird die Energierückgewinnung verbessert, da die Speichereinrichtung kontinuierlich geladen werden kann.

Die Aufgabe wird somit vollkommen gelöst.

Bei einer Weiterbildung der Erfindung weist die Schalteinrichtung eine Brückenschaltung mit zumindest zwei Teilbrücken mit jeweils zwei Schaltelementen auf, die so angeordnet sind, dass jeweils zwei in Reihe liegende Schaltelemente eine Brücke zwischen einem ersten Anschlusspunkt und einem zweiten Anschlusspunkt bilden, wobei der elektrische Motor an den mittleren Knotenpunkten der Brücken anschließbar ist. Die oberen Schaltelemente verbinden dabei die beiden Knotenpunkte mit dem ersten Anschlusspunkt, während die unteren Schaltelemente die Knotenpunkte mit dem zweiten Anschlusspunkt verbinden. Eine Brückenschaltung mit zwei Teilbrücken ist für DC Motoren einsetzbar. Eine Brückenschaltung mit drei Teilbrücke ist zur Ansteuerung eines BLDC Motors (brushless DC Motor) geeignet und mit vier Teilbrücken zur Ansteuerung eines Schrittmotors.

Durch diese Konfiguration wird eine flexible und effiziente Steuerung des elektrischen Motors ermöglicht, da sowohl der Antriebsmodus als auch der Generatormodus durch gezielte Ansteuerung der Schaltelemente realisiert werden kann, ohne dass zusätzliche externe Umschaltungen erforderlich sind. An dieser Stelle sei angemerkt, dass die Ansteuerung des Motors auch über andere Schaltungen erfolgen kann, d.h. eine Brückenschaltung mit zumindest zwei Teilbrücken ist zwar eine bevorzugte Lösung, aber nicht die einzige Lösung.

Bei einer weiteren vorteilhaften Ausgestaltung sind die Schaltelemente als MOSFETs ausgebildet und parallel zu jedem Schaltelement ist eine Freilaufdiode vorgesehen.

Dies ermöglicht eine kontrollierte Ableitung der im Motor induzierten Spannung und reduziert unerwünschte Spannungsspitzen, die andernfalls zu Störungen oder Schäden an der Schaltung führen könnten. Die Freilaufdioden tragen somit zur Erhöhung der Betriebssicherheit und zur Schonung der elektrischen Bauelemente bei.

In einer weiteren Ausgestaltung sind die Schaltelemente bei einer Brückenschaltung mit zwei Teilbrücken im Antriebsmodus so angesteuert, dass einer der beiden Knotenpunkte mit dem ersten Anschlusspunkt und der andere der beiden Knotenpunkte mit dem zweiten Anschlusspunkt verbunden ist, wobei zwischen dem ersten und dem zweiten Anschlusspunkt eine Motorspannung anliegt.

Dadurch wird eine zuverlässige Energieversorgung des Motors sichergestellt, die eine gewünschte Bewegung, insbesondere Geschwindigkeitstrajektorie, gewährleistet.

In einer weiteren bevorzugten Ausführung ist die Steuereinheit ausgelegt, die Schaltelemente so anzusteuern, dass zwischen den Knotenpunkten eine durch Pulsweitenmodulation steuerbare Motorspannung anliegt, sodass die Drehzahl des elektrischen Motors einstellbar ist.

Dies ermöglicht eine Regelung der Motorbewegung und eine Anpassung an unterschiedliche Betriebsbedingungen, wodurch eine optimierte Steuerung des Antriebs gewährleistet wird. Insbesondere lassen sich dadurch definierte Geschwindigkeitstrajektorien realisieren.

In einer weiteren Ausführung sind die Schaltelemente im Generatormodus so angesteuert, dass abhängig von der Drehrichtung einer der beiden Knotenpunkte mit dem ersten Anschlusspunkt und der andere Knotenpunkt mit dem zweiten Anschlusspunkt verbunden ist.

Dies erlaubt eine gezielte Nutzung der generierten elektrischen Energie und sorgt für eine effektive Bremsung des Motors.

In einer weiteren Variante sind die Schaltelemente im Generatormodus so angesteuert, dass abhängig von der Drehrichtung des elektrischen Motors beide Knotenpunkte bei einer Brückenschaltung mit zwei Teilbrücken mit dem ersten oder dem zweiten Anschlusspunkt verbunden sind.

Dies sorgt für eine gezielte Anpassung der Bremswirkung und ermöglicht eine optimale Kontrolle über die Bewegungsverzögerung des Motors.

In einer weiteren Ausgestaltung ist die Steuerungseinheit ausgelegt, die Schaltelemente so anzusteuern, dass die Bremsung des elektrischen Motors im Generatormodus durch Pulsweitenmodulation steuerbar ist.

Dadurch kann die Stärke der Bremswirkung gesteuert werden, sodass eine optimale Anpassung der Geschwindigkeitstrajektorie erfolgt und unerwünschte abrupte Bremsvorgänge vermieden werden.

In einer weiteren Weiterbildung ist eine elektrische Verbindung zwischen dem ersten Anschlusspunkt und der Speichereinrichtung vorgesehen, um das Speicherelement über die am ersten Anschlusspunkt anliegende Spannung zu laden.

Diese Maßnahme ermöglicht eine effiziente Energienutzung, indem die beim Bremsen gewonnene elektrische Energie gespeichert und für spätere Nutzung bereitgestellt wird.

In einer weiteren bevorzugten Ausgestaltung weist die Speichereinrichtung ein erstes Schaltelement auf, das ausgelegt ist, das Laden des Speicherelements zu steuern, wobei das Schaltelement durch die Steuereinheit steuerbar ist. Dies erlaubt eine gezielte Steuerung des Ladevorgangs und stellt sicher, dass der Energiespeicher nur dann geladen wird, wenn dies erforderlich ist.

In einer weiteren vorteilhaften Ausführung weist die Speichereinrichtung ein zweites Schaltelement auf, das steuerbar über die Steuereinheit die Speichereinrichtung mit Energie versorgt. Dadurch kann die gespeicherte Energie gezielt und bedarfsgerecht genutzt werden, um beispielsweise im Notfall die Steuerungseinheit oder andere elektrische Komponenten zu betreiben.

In einer weiteren Ausgestaltung ist das Speicherelement als wiederaufladbare Batterie oder als Kondensator ausgeführt. Dies ermöglicht eine anwendungsspezifische Auswahl des Speicherelements, abhängig von den jeweiligen Anforderungen an Kapazität und Ladezyklen.

In einer weiteren Weiterbildung wird ein Verfahren zum Steuern eines elektromechanischen Antriebs zum Betätigen eines Öffnungselements, insbesondere eines Gebäudes bereitgestellt. Dabei wird eine Schalteinrichtung angesteuert, um einen elektrischen Motor des elektromechanischen Antriebs in einem Antriebsmodus mit Energie zu versorgen. Zudem wird die Schalteinrichtung angesteuert, um den elektrischen Motor in einem Generatormodus zur Energierückgewinnung und/oder Bremsung zu betreiben, wobei die dabei vom elektrischen Motor erzeugte Energie zumindest teilweise einem Speicherelement zum Laden zugeführt wird. Durch dieses Verfahren kann eine effiziente und bedarfsgerechte Steuerung des Antriebs realisiert werden, die sowohl eine präzise Bewegung als auch eine gezielte Energienutzung ermöglicht.

In einer weiteren bevorzugten Ausführung weist die Schalteinrichtung eine Brückenschaltung mit zumindest zwei Teilbrücken auf. Dies ermöglicht eine besonders kompakte und effiziente Umsetzung des Steuerungskonzepts für DC Motoren mit zwei Teilbrücken, für BLDC Motoren mit drei Teilbrücken und für Schrittmotoren mit vier Teilbrücken, da mit einer einzigen Schaltung sowohl der Antriebs- als auch der Generatormodus realisiert werden kann.

In einer weiteren Weiterbildung erfolgt die Ansteuerung so, dass durch eine Pulsweitenmodulation im Antriebsmodus die Motorspannung und/oder im Generatormodus die Bremsung steuerbar ist. Dies ermöglicht eine besonders flexible und präzise Steuerung des Motors in beiden Betriebsmodi und trägt zur Optimierung der gesamten Systemleistung bei.

In einer weiteren Ausgestaltung wird ein elektromechanischer Antrieb zum Betätigen eines Öffnungselements, insbesondere eines Gebäudes bereitgestellt, der eine Steuerungsvorrichtung aufweist, wie sie zuvor beschrieben wurde, sowie einen elektrischen Motor, der über die Steuerungsvorrichtung in einem Antriebsmodus oder einem Generatormodus betreibbar ist.

Diese Kombination ermöglicht eine zuverlässige und energieeffiziente Steuerung des Öffnungselements und stellt sicher, dass sowohl der reguläre Betrieb als auch der Notfallbetrieb optimal unterstützt werden.

Es versteht sich, dass die vorstehend genannten und die nachstehend noch zu erläuternden Merkmale nicht nur der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
- Figur 1: eine schematische Darstellung eines elektromechanischen Antriebs für einen Flügel einer Tür;
- Figur 2: ein schematisches Blockschaltbild einer erfindungsgemäßen Steuerungsvorrichtung;
- Figur 3: ein detaillierteres Blockschaltbild der erfindungsgemäßen Steuerungsvorrichtung; und
- Figur 4: ein schematisches Blockschaltbild einer Steuerung aus dem Stand der Technik.

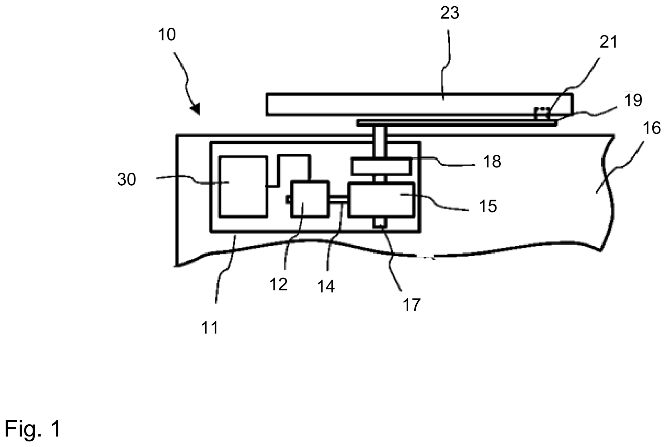

Wie aus Figur 1 ersichtlich ist, weist ein beispielhafter elektromechanischer Antrieb 10 zum Betätigen eines Öffnungselements, insbesondere eines Gebäudes, hier ein beweglicher Flügel 16, ein Gehäuse 11 auf, in welchem eine Steuerungsvorrichtung 30 und ein Elektromotor 12 (nachfolgend kurz Motor genannt) vorgesehen sind, dessen Motorwelle 14 über eine Kraftübertragungseinrichtung mit dem Flügel 16 in Wirkverbindung steht, so dass eine Bewegung der Motorwelle 14 eine Bewegung des Flügels 16 bewirkt. Ferner enthält das Gehäuse 11 einen mechanischen Energiespeicher 18, welcher durch eine Öffnungsbewegung des Flügels 16 aufgeladen und durch eine Schließbewegung des beweglichen Flügels 16 entladen wird, sowie eine Bremsvorrichtung als Teil der Steuerungsvorrichtung 30, durch welche die Bewegung des Flügels 16 gebremst werden kann, indem der Motor 12 als Generator (Generatormodus) betrieben wird. Hierbei entsteht durch die Bewegung des Flügels 16 des als Generator betriebenen Motors 12 eine bewegungsabhängige Ausgangsspannung, die in Wärme umgesetzt wird und/oder zum Laden eines elektrischen Energiespeicher genutzt wird. Der Geschwindigkeitsverlauf (Geschwindigkeitstrajektorie) des Flügels 16 lässt sich auf diese Weise steuern bzw. regeln.

Der mechanische Energiespeicher 18 ist vorzugsweise als Feder ausgeführt und wird durch manuelles Öffnen des Flügels 16 mit Energie aufgeladen, welche den losgelassenen Flügel 16 durch Abgabe dieser Energie wieder schließt.

Wie aus Figur 1 weiter ersichtlich ist, ist bei dem dargestellten Ausführungsbeispiel das Gehäuse 11 flügelfest am oberen linken Randbereich des beweglichen Flügels 16 montiert. Die Motorwelle 14 des Motors 12 ist über ein Getriebe 15 mit einer Abtriebswelle 17 gekoppelt, welche mit einem Gleitarm 19 gekoppelt ist. Der Gleitarm 19 weist an seinem freien Ende einen Gleitstein 21 auf, welcher in einer blendenfest montierten Gleitschiene 23 geführt ist. Der Motor 12 ist vorzugsweise als permanentmagneterregter Gleichstrommotor ausgeführt. Andere Motoren, wie BLDC Motor sind natürlich auch denkbar und je nach Anwendungsfall sogar dem DC Motor zu bevorzugen. Selbstverständlich sind statt einem Gleitarm auch andere Ausgestaltungen denkbar, bspw. eine Verbindung über ein Gestänge.

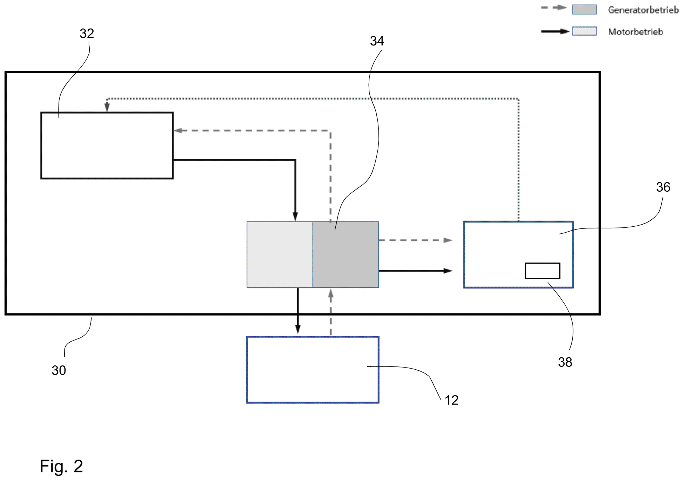

In Figur 2 ist nun die Steuerungsvorrichtung 30 schematisch als Blockdiagramm dargestellt. Die Steuerungsvorrichtung 30 weist eine Steuereinheit 32, eine Schalteinrichtung 34 und eine Speichereinheit 36 auf, die zumindest ein Speicherelement 38 zum Speichern und Abgeben elektrischer Energie enthält. Die Schalteinrichtung 34 ist mit dem Elektromotor 12 verbunden, um diesen entweder in einem Antriebsmodus oder einem Generatormodus zu betreiben. Im Antriebsmodus liefert die Schalteinrichtung 34 gesteuert Energie an den Motor, so dass er bspw. den Flügel 16 in eine Offenposition führt. Im Generatormodus wird der Motor 12 durch die Bewegung des Flügels 16 in die Offenposition oder bevorzugt in die Geschlossenposition angetrieben und erzeugt dadurch Energie. Diese Energie fließ zur Schalteinrichtung 34, die sie gesteuert der Speichereinheit 36 zuführt und/oder durch einen gesteuerten Kurzschluss in Wärme umwandelt. Durch die Steuerung des Stromflusses durch die Schalteinrichtung 34 kann dabei die Bremswirkung des Motors eingestellt bzw. beeinflusst werden.

Wie sich aus Figur 2 noch ergibt, liefert die Speichereinheit 36, wie durch eine gestrichelte Linie angedeutet, Energie an die Steuereinheit 32. Dieser Energiefluss ist dann notwendig, wenn die externe Energieversorgung der Steuereinheit, bspw. in einem Notfall, ausfällt. Dadurch kann die Steuereinheit 32 die Steuerung der Schalteinrichtung 34 auch im Notfall fortführen und damit den Flügel 16 in eine vordefinierte Notfall-Position führen, üblicherweise in die Geschlossenposition. Die in Figur 2 dargestellten durchgezogenen Linien sollen den Stromfluss im Antriebsmodus andeuten, während die gestrichelten Linien den Stromfluss im Generatormodus darstellen. Zu erkennen ist beispielsweise, dass in beiden Modi Energie an die Speichereinrichtung 36 fließt, um so das Speicherelement bei Bedarf laden zu können. Die gespeicherte Energie kann je nach Bedarf genutzt werden.

Im Gegensatz zu bisherigen Steuerungsvorrichtungen übernimmt die Schalteinrichtung nicht nur die Steuerung des Motors 12 im Antriebsmodus sondern steuert auch das Bremsen und/oder Laden im Generatormodus. Wie sich aus Figur 4 ergibt, die eine Lösung aus dem Stand der Technik wiedergibt, sind dort die Ansteuerung der Motors und die Bremsung des Motors im Generatormodus als getrennte Baugruppen realisiert.

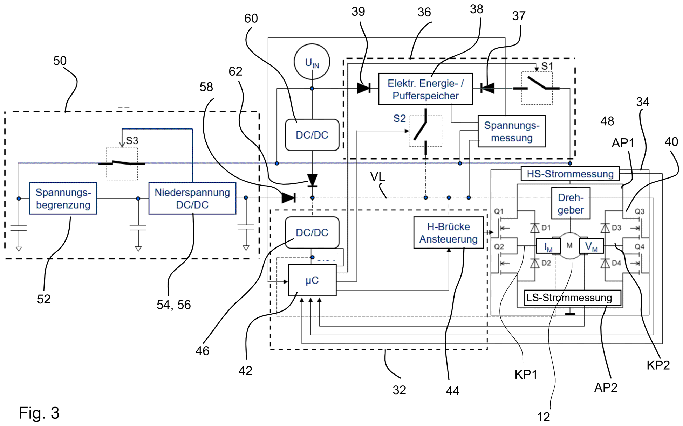

Mit Bezug auf Figur 3, die ein detailliertes Blockdiagramm der Steuerungsvorrichtung 30 zeigt, wird nachfolgend der beispielhafte Aufbau von Steuerungseinheit 32, Schalteinrichtung 34 und Speichereinrichtung 36 erläutert.

Die Schalteinrichtung 34 weist beispielsweise eine H-Brückenschaltung 40 (nachfolgend kurz H-Brücke genannt) auf, den Energiefluss zu bzw. vom Motor 12 steuert. Die H-Brücke 40 zur Steuerung des elektrischen Motors 12 besteht aus zwei Teilbrücken. Jede Teilbrücke weist zwei in Serie geschaltete steuerbare Schaltelemente auf, die vorzugsweise als MOSFETs (Metal-Oxide-Semiconductor Field-Effect Transistors) ausgeführt sind. Die erste Teilbrücke umfasst die Schaltelemente Q1 und Q2, während die zweite Teilbrücke die Schaltelemente Q3 und Q4 umfasst. Diese Anordnung ermöglicht es, den elektrischen Motor 12 sowohl im Antriebsmodus als auch im Generatormodus zu betreiben, indem die Schaltelemente gezielt angesteuert werden. An dieser Stelle sei angemerkt, dass diese H-Brückenschaltung mit zwei Teilbrücken stellvertretend steht für Brückenschaltungen mit mehr als zwei Teilbrücken. Der Aufbau der Teilbrücken bei solchen Brückenschaltungen entspricht dem Aufbau einer Teilbrücke, wie sie nachfolgend erläutert wird.

Die H-Brücke 40 besteht aus den vier Schaltelementen Q1, Q2, Q3 und Q4, die zwischen zwei Anschlusspunkten AP1 und AP2 angeordnet sind. Ein erster Anschlusspunkt AP1 dient als Versorgungsspannungspunkt (verbunden mit einer Spannungsversorgung Uᵢₙ), während der zweite Anschlusspunkt AP2 als Massepotential (verbunden mit GND) fungiert. Die vier Schaltelemente sind in zwei symmetrische Teilbrücken unterteilt, wobei die erste Teilbrücke das Schaltelement Q1 aufweist, das den ersten Anschlusspunkt AP1 mit einem ersten Knotenpunkt KP1 verbindet, während das Schaltelement Q2 den ersten Knotenpunkt KP1 mit dem zweiten Anschlusspunkt AP2 verbindet. Die zweite Teilbrücke ist entsprechend aufgebaut, wobei das Schaltelement Q3 den ersten Anschlusspunkt AP1 mit einem zweiten Knotenpunkt KP2 verbindet und das Schaltelement Q4 den zweiten Knotenpunkt KP2 mit dem zweiten Anschlusspunkt AP2 verbindet. Der elektrische Motor 12 ist zwischen den beiden Knotenpunkten KP1 und KP2 angeschlossen, sodass durch gezielte Ansteuerung der Schaltelemente eine Steuerung der Motorbewegung erreicht werden kann.

Im Antriebsmodus wird der elektrische Motor aktiv über die Spannungsversorgung Uᵢₙ mit Energie versorgt. Die gewünschte Drehrichtung des Motors kann durch entsprechende Kombinationen der Schaltelemente eingestellt werden. Wenn Q1 und Q4 eingeschaltet sind, während Q2 und Q3 ausgeschaltet sind, fließt der Strom von AP1 über Q1 durch den Motor und über Q4 nach AP2, wodurch sich der Motor in eine Richtung dreht. Werden stattdessen Q3 und Q2 leitend geschaltet, während Q1 und Q4 gesperrt bleiben, fließt der Strom von AP1 über Q3 durch den Motor und über Q2 nach AP2, sodass der Motor in die entgegengesetzte Richtung dreht. Die Drehzahl des Motors kann durch eine pulsweitenmodulierte Ansteuerung der Schaltelemente Q1-Q4 geregelt werden, indem bspw. eines der leitenden Schaltelemente periodisch ein- und ausgeschaltet wird.

Im Generatormodus arbeitet der Motor als Generator und wandelt mechanische Energie in elektrische Energie um, wodurch der Motor gebremst wird. Dies geschieht, wenn eine äußere Kraft oder die Feder 18 auf den Flügel 16 einwirkt. Je nach Drehrichtung des Motors wird die generierte elektrische Energie zur Bremsung und bei Bedarf zur Energierückgewinnung, hier in Form von Laden des Speicherelements, genutzt. Eine Bremswirkung kann durch gezieltes Kurzschließen der Motoranschlüsse erzielt werden, indem entweder Q2 und Q4 oder Q1 und Q3 kurzzeitig leitend geschaltet werden. Durch Pulsweitenmodulation kann die Bremskraft dabei gezielt gesteuert werden. Alternativ kann die erzeugte Energie zur Speisung des Speicherelements genutzt werden, wodurch der Motor ebenfalls gebremst wird. Die generierte Energie kann dabei gezielt in das Speicherelement 38 der Speichereinrichtung 36 geleitet werden, indem, abhängig von der Drehrichtung des Motors, die Schaltelemente Q1 und Q4 oder Q2 und Q3 so angesteuert werden, dass die Energie in die Speichereinrichtung fließt.

Zur Absicherung der H-Brücke 40 gegen schädliche Spannungsspitzen sind parallel zu jedem Schaltelement, insbesondere MOSFET, Freilaufdioden D1 bis D4 vorgesehen. Diese Dioden ermöglichen den Abbau induktiver Spannungsspitzen, die durch die Magnetfelder des Motors entstehen. Zudem kann eine Strommessung an den High-Side- und Low-Side-MOSFETs Q1 und Q3 bzw. Q2 und Q4 erfolgen, um eine Regelung der Bremskraft und des Energieflusses zu ermöglichen.

Durch den Einsatz der H-Brücke 40 können sowohl die Drehzahl als auch die Drehrichtung der elektrischen Motors 12 flexibel gesteuert werden. Die Möglichkeit zur Energierückgewinnung erhöht den Wirkungsgrad des Systems erheblich, da die beim Bremsen entstehende Energie nicht in Wärme (bspw. im Motor) umgewandelt, sondern gezielt weiterverwendet wird. Die PWM-Regelung ermöglicht eine effiziente Anpassung der Motordrehzahl bzw. der Bremswirkung des Motors. Durch die Verwendung dieser H-Brücke kann somit eine robuste, energieeffiziente und präzise Steuerung der elektromechanischen Antriebs realisiert werden.

Die Steuereinheit 32 weist beispielsweise einen Mikrocontroller 42 und eine Ansteuerung 44 für die H-Brücke 40 auf. Die Ansteuerung 44 ist ausgelegt, jeden der Schaltelemente Q1 bis Q4 unabhängig voneinander anzusteuern, d.h. in den leitenden oder sperrenden Zustand zu schalten. Die Ansteuerung 44 wird wiederum vom Mikrocontroller 42 gesteuert. So wird der Antriebsmodus und der Generatormodus, sowie die Pulsweitenmodulation der H-Brücke sowohl im Antriebsmodus als auch im Generatormodus durch den Mikrocontroller 42 gesteuert.

Die Spannungsversorgung des Mikrocontrollers 42 erfolgt über die Spannungsversorgung Uᵢₙ, und einen DC/DC Wandler 46, der dem Mikrocontroller eine vordefinierten Spannung bereitstellt. Der DC/DC Wandler 46 ist eingangsseitig hierfür mit einer Versorgungsleitung VL verbunden, an die die Steuerungselemente der Steuerungsvorrichtung 30 angeschlossen sind.

Dem Mikrocontroller 42 werden verschiedene Messwerte zugeführt, um die Steuerung der H-Brücke möglichst umfassend und präzise durchführen zu können. So werden bspw. Motorstrom und Motorspannung Im und Vm gemessen, wie auch die Drehzahl des Motors über einen Drehgeber und der Strom zur Speichereinrichtung 36. Ferner ist auch eine Spannungsmessung 48 vorgesehen, die die Spannungen am Eingang des DC/DC-Wandlers 46, am Speicherelement 38 und am ersten Anschlusspunkt AP1 misst.

Die Speichereinrichtung 36 weist das Speicherelement 38 auf, das bspw. als Kondensator oder wiederaufladbare Batterie ausgebildet ist. Ferner ist ein erster Schalter S1 vorgesehen, der in einer elektrischen Verbindung zwischen Speicherelement 38 und erstem Anschlusspunkt AP1 der Schalteinrichtung 34 liegt. Über diese schaltbare Verbindung kann das Speicherelement 38 über die am ersten Anschlusspunkt AP1 anliegende Spannung geladen werden. Die Ansteuerung dieses Schalters S1 erfolgt über den Mikrocontroller 42. Der Schalter S1 selbst kann als elektronischer Schalter, bspw. als MOSFET, insbesondere P-MOSFET, oder als elektromechanischer Schalter, bspw. als Relais, vorgesehen sein. Denkbar ist unter anderem, das der Schalter S1 getaktet betrieben wird, um eine gewünschte Bremswirkung während des Ladens einstellen zu können.

Die Speichereinrichtung 36 umfasst ferner einen zweiten Schalter S2, der eine Verbindung zwischen dem Pluspol des Speicherelements 38 und der Versorgungsleitung VL der Steuerungselemente der Steuerungsvorrichtung, bspw. des Mikrocontrollers 42, der Ansteuerung 44 und des Drehgebers, herstellt. Ist der zweite Schalter S2 geschlossen, kann die gespeicherte Energie im Speicherelement 38 zur Versorgung der Steuerungselemente über die Versorgungsleitung VL genutzt werden. Das ist bspw. im Notfall notwendig, wenn die allgemeine Spannungsversorgung Uᵢₙ ausgefallen ist. Die Steuerung des Motors ist dann noch möglich.

Die Ansteuerung dieses Schalters S2 erfolgt ebenfalls über den Mikrocontroller 42. Der Schalter S2 selbst kann als elektronischer Schalter, bspw. als MOSFET, insbesondere P-MOSFET, oder als elektromechanischer Schalter, bspw. als Relais, vorgesehen sein.

Die Speichereinrichtung 36 weist ferner noch zwei Dioden 37, 39 auf, wobei die Diode 37 in Reihe mit dem Schalter S1 liegt und die Diode 39 in einer Verbindung zwischen der Versorgungsspannung Uin und dem Speicherelement 38. Die Diode 37 verhindert, dass bei kleinen Brückenspannungen eine Entladung des Speichers stattfindet und die Diode 39 verhindert eine Entladung im Falle eine Stromausfalls, d.h. einer Versorgungsspannung Uᵢₙ von 0V.

Die Ansteuerung der beiden Schalter S1 und S2 erfolgt, wie bereits beschreiben, über den Mikrocontroller 42. Selbstverständlich wäre es auch denkbar, diese Steuerungsfunktionalität in einem eigenen Mikrocontroller in der Speichereinrichtung 36 vorzusehen.

Schließlich umfasst die Steuerungsvorrichtung 30 einen Schaltungsblock 50, der einen Schalter S3, bspw. ein N-Kanal-MOSFET des Verarmungstyps, einen Spannungsbegrenzer 52, bspw. in Form einer Zener-Diode, einen Aufwärtswandler 54, bspw. ein Boost-Converter, und eine Abschaltlogik 56, die den Schalter S3 ansteuert. Der Aufwärtswandler 54 ist dabei eingangsseitig mit dem Spannungsbegrenzer 52 verbunden, der seinerseits mit dem Schalter S3 verbunden ist. Ausgangsseitig ist der Aufwärtswandler 54 mit der Versorgungsleitung VL der Steuerelemente über eine Diode 58 verbunden.

Der Schaltungsblock 50, d.h. eine Seite des Schalters S3, ist mit dem ersten Anschlusspunkt AP1 elektrisch verbunden und wirkt im Generatormodus oder bei einem Stromausfall. Für den Fall einer zu hohen Generatorspannung und/oder vorhandener Versorgungsspannung Uᵢₙ wird der Schalter S3 geöffnet, so dass die Schaltungselemente über einen DC/DC-Wandler 60, der mit der Versorgungsspannung Uᵢₙ verbunden ist, mit Energie versorgt. Der DC/DC-Wandler 60 ist dabei eingangsseitig mit der Versorgungsspannung Uᵢₙ verbunden und ausgangsseitig über eine Diode 62 mit der Versorgungsleitung VL für die Steuerungselemente.

Eine weitere Funktion des Schaltungsblocks 50 im Generatorbetrieb und bei Stromausfall bzw. Stromunterbrechung (Versorgungsspannung UIN = 0V) besteht darin, dass über den Schaltungsblock 50 auch bei einer sehr kleiner Generatorspannung am ersten Anschlusspunkt AP1 (< 1V, d.h. die Drehzahl des Motors ist sehr niedrig bzw. der Flügel 16 bewegt sich sehr langsam) der Mikrocontroller 42 und die Ansteuerung 44 über die Versorgungsleitung VL mit Energie versorgt werden, so dass auch in einem solchen Fall aktiv nach einer definierten oder gewünschten Geschwindigkeitstrajektorie des Flügels 16 geregelt werden kann.

Die zuvor beschriebene Steuerungsvorrichtung zeichnet sich insbesondere dadurch aus, dass die Steuereinheit 32 die Schalteinrichtung 34 so ansteuert, dass der Motor 12 auch in einem Generatormodus zur Energierückgewinnung und Bremsung betrieben werden kann, wobei die im Generatormodus vom Motor erzeugte Energie zumindest teilweise dem Speicherelement 38 zum Laden zugeführt wird.

Im Antriebsmodus wird der elektrische Motor 12 durch die Schalteinrichtung 34 mit Energie versorgt, sodass der Flügel 16 eine definierte Bewegung ausführen kann. Die Steuereinheit 32 regelt die Ansteuerung der Schalteinrichtung 34 so, dass der Motor über eine Pulsweitenmodulation eine definierte Geschwindigkeitstrajektorie umsetzt. Die Energie für den Betrieb des Motors wird durch die externe Versorgungsspannung Uᵢₙ, die bspw. von einem Netzteil kommt, bereitgestellt. Während des Antriebsmodus kann das Speicherelement 38 über die Diode 39 mit Energie geladen werden, sodass in einem Notfall eine unterbrechungsfreie Steuerung gewährleistet ist.

Im Generatormodus wird der Motor 12 als Generator betrieben, um die Bewegungsenergie des Flügels 16 in elektrische Energie umzuwandeln. Dies geschieht insbesondere dann, wenn der Flügel durch äußere Krafteinwirkung bewegt wird, beispielsweise durch das mechanische Speicherelement 18 oder durch manuelle Betätigung des Flügels 16. Die durch die Generatorfunktion des Motors erzeugte elektrische Energie wird über die Schalteinrichtung so gesteuert, dass sie zur gezielten Bremsung des Motors und bei Bedarf zur Speicherung elektrischer Energie in der Speichereinrichtung genutzt wird. Das heiß mit anderen Worten, dass das Speicherelement 38 in beiden Modi geladen werden kann.

Zur präzisen Steuerung der Motorbewegung sind die Schaltelemente Q1-Q4 der H-Brücke 40 so angesteuert, dass sie sowohl im Antriebsmodus als auch im Generatormodus optimale Steuerungsmöglichkeiten bieten. Im Antriebsmodus wird einer der beiden Knotenpunkte mit dem ersten Anschlusspunkt AP1 und der andere Knotenpunkt mit dem zweiten Anschlusspunkt AP2 verbunden, sodass eine Versorgungsspannung zwischen dem ersten und dem zweiten Anschlusspunkt anliegt. Dies ermöglicht eine gezielte Steuerung der Drehrichtung des Motors.

Zusätzlich kann die Steuereinheit 32 die Schaltelemente Q1-Q4 so ansteuern, dass zwischen den Knotenpunkten eine durch Pulsweitenmodulation steuerbare Spannung anliegt, wodurch die Drehzahl des elektrischen Motors präzise eingestellt werden kann.

Im Generatormodus erfolgt die Ansteuerung der Schaltelemente abhängig von der Drehrichtung des Motors. Einer der beiden Knotenpunkte wird mit dem ersten Anschlusspunkt AP1 und der andere mit dem zweiten Anschlusspunkt AP2 verbunden, sodass die durch den Motor generierte elektrische Energie gezielt genutzt werden kann. Alternativ können die Schaltelemente auch so angesteuert werden, dass beide Knotenpunkte mit dem ersten AP1 oder dem zweiten Anschlusspunkt AP2 verbunden werden, wodurch eine gezielte Regelung der Bremskraft erreicht wird. Die Bremswirkung kann dabei durch Pulsweitenmodulation der Schaltelemente Q1-Q4 präzise eingestellt werden.

Ein wesentliches Merkmal der Erfindung ist die Integration einer Speichereinrichtung, die eine zuverlässige Energieversorgung der Steuerungseinheit auch im Falle eines Ausfalls der externen Energiequelle (Uin=0V) sicherstellt. Die Speichereinrichtung ist über eine elektrische Verbindung mit dem ersten Anschlusspunkt AP1 verbunden, sodass sie durch die am ersten Anschlusspunkt anliegende Spannung im Generatormodus geladen werden kann.

Um eine gezielte Steuerung des Ladevorgangs zu ermöglichen, weist die Speichereinrichtung das erste Schaltelement S1 auf, das durch die Steuereinheit ansteuerbar ist und das Laden des Speicherelements steuert. Zusätzlich kann die Speichereinrichtung das zweite Schaltelement S2 aufweisen, das über die Steuereinheit ansteuerbar ist, um die gespeicherte Energie für die Steuerungseinheit oder andere Komponenten freizugeben.

Das Speicherelement kann als wiederaufladbare Batterie oder als Kondensator ausgeführt sein, wobei die Auswahl des Speichertyps von den spezifischen Anforderungen an die Kapazität und die Ladezyklen abhängt.

Zur optimalen Steuerung des Generatormodus können verschiedene Messsignale genutzt werden, darunter Drehgeber-Position, Spannung des Speicherelements, Motorspannung, Strommessung an der High-Side- und Low-Side-Seite der H-Brücke 40 sowie der Motorstrom. Diese Parameter werden von der Steuereinheit, insbesondere dem Mikrocontroller 42, erfasst und ausgewertet, um eine effiziente Energienutzung zu gewährleisten und sicherzustellen, dass die generierte Energie möglichst nicht in Wärme umgewandelt sondern gespeichert wird..

Im Falle eines Ausfalls der externen Energieversorgung Uin wird die verfügbare Generatorenergie sowohl zur Ladung des Speicherelements als auch für die Dämpfung genutzt. Dadurch kann die Bewegung des Flügels 16 auch bei einem Stromausfall kontrolliert werden. Um eine unkontrollierte Bremsung zu verhindern, wird mithilfe des Schalters S1 sichergestellt, dass die Geschwindigkeitstrajektorie des Flügels in Abhängigkeit von der Lade- und Generatorspannung geregelt werden kann. Mithilfe des Schalters S1 kann im Generatorbetrieb die Dämpfung bzw. die Geschwindigkeitstrajektorie des Flügels 16 freier gestaltet und kontrolliert werden, da z.B. im Falle eines entladenen oder teilentladenen Speicherelements bei gleichzeitig höherer Generatorspannung (Generatorspannung größer als Versorgungsspannung/Speicherelement-Spannung) eine "unkontrollierte" oder ungewünschte Dämpfung aufgrund des Ladestroms verhindert wird. Über den Schalter S2 wird bei zu geringer Generatorenergie und/oder Stromausfall die Energie für die Steuerung, bspw.. Mikrocontroller 42 und Ansteuerung 44, freigegeben.

Darüber hinaus umfasst die Steuerungsvorrichtung den Schaltungsblock 50 mit dem Spannungsbegrenzer 52 und dem Aufwärtswandler 54, sodass die Steuereinheit 32 auch bei sehr niedriger Generatorspannung zuverlässig betrieben werden kann. Im Falle einer zu hohen Generatorspannung wird die Energiezufuhr zur Steuerungseinheit 32 automatisch geregelt, um eine optimale Energieverteilung sicherzustellen.

Durch die Integration der Schalteinrichtung als Brückenschaltung mit zumindest zwei Teilbrücken kann der elektrische Motor sowohl im Antriebsmodus als auch im Generatormodus effizient gesteuert werden. Die Nutzung der generierten Energie zur Speicherung und zum Betrieb der Steuerungseinheit im Notfallbetrieb stellt sicher, dass das Öffnungselement auch bei einem Stromausfall zuverlässig gesteuert werden kann. Die Regelung der Bremswirkung über Pulsweitenmodulation ermöglicht eine präzise Anpassung der Bewegungstrajektorie des Motors. Die Kombination aus Energiegewinnung, Energiespeicherung und flexibler Ansteuerung der Schaltelemente führt zu einem hohen Wirkungsgrad des gesamten Systems und reduziert unnötige Energieverluste.

Die Erfindung ermöglicht somit eine optimierte Steuerung eines elektromechanischen Antriebs, die sowohl eine zuverlässige Bewegung des Flügels 16 als auch eine energieeffiziente Betriebsweise gewährleistet.

**Bezugszeichenliste:**

| | | | |
|---|---|---|---|
| | | 54 → | Aufwärtswandler |
| 10 → | Elektromechanischer Antrieb | 56 → | Abschaltlogik |
| 11 → | Gehäuse | 58 → | Diode (am Aufwärtswandler) |
| 12 → | Elektromotor / Motor | 60 → | DC/DC-Wandler |
| 14 → | Motorwelle | 62 → | Diode |
| 15 → | Getriebe | AP1 → | Erster Anschlusspunkt |
| 16 → | Flügel (beweglicher Flügel) | AP2 → | Zweiter Anschlusspunkt |
| 17 → | Abtriebswelle | D1 → | Freilaufdiode (parallel zu Q1 |
| 18 → | Mechanischer Energiespeicher / Feder | D2 → | Freilaufdiode (parallel zu Q2) |
| 19 → | Gleitarm | D3 → | Freilaufdiode (parallel zu Q3) |
| 21 → | Gleitstein | D4 → | Freilaufdiode (parallel zu Q4) |
| 23 → | Gleitschiene | GND → | Masse / Massepotential |
| 30 → | Steuerungsvorrichtung | Im → | Motorstrom (Messwert) |
| 32 → | Steuereinheit | KP1 → | Erster Knotenpunkt |
| 34 → | Schalteinrichtung | KP2 → | Zweiter Knotenpunkt |
| 36 → | Speichereinrichtung | Q1 → | Schaltelement (oberer linker MOSFET) |
| 37 → | Diode (in Speichereinrichtung) | Q2 → | Schaltelement (unterer linker MOSFET) |
| 38 → | Speicherelement | Q3 → | Schaltelement (oberer rechter MOSFET) |
| 39 → | Diode (in Speichereinrichtung) | Q4 → | Schaltelement (unterer rechter MOSFET) |
| 40 → | H-Brückenschaltung / H-Brücke | S1 → | Erster Schalter (in Speichereinrich-tung) |
| 42 → | Mikrocontroller | S2 → | Zweiter Schalter (in Speichereinrich-tung) |
| 44 → | Ansteuerung (für H-Brücke) | S3 → | Schalter (im Schaltungsblock 50) |
| 46 → | DC/DC Wandler | Uin → | Spannungsversorgung / Versorgungsspannung |
| 48 → | Spannungsmessung | VL → | Versorgungsleitung |
| 50 → | Schaltungsblock | Vm → | Motorspannung (Messwert) |
| 52 → | Spannungsbegrenzer | | |

## Patentansprüche

1. Steuerungsvorrichtung für einen elektromechanischen Antrieb zum Betätigen eines Öffnungselements, insbesondere eines Gebäudes, mit einer Schalteinrichtung (34), die ausgelegt ist, einen elektrischen Motor (12) des elektromechanischen Antriebs in einem Antriebsmodus mit Energie zu versorgen, einer Steuereinheit (32) zur Steuerung der Schalteinrichtung (34); und
einer Speichereinrichtung (36) mit einem Speicherelement (38) zum Speichern elektrischer Energie, die zur Versorgung der Steuereinheit (32), vorzugsweise in einem Notfallbetrieb, dient;
**dadurch gekennzeichnet, dass**
die Steuereinheit (32) ausgelegt ist, die Schalteinrichtung (34) so anzusteuern, dass der elektrische Motor (12) auch in einem Generatormodus zur Energierückgewinnung und/oder Bremsung betreibbar ist, und
die Schalteinrichtung (34) ausgelegt ist, die im Generatormodus vom Motor (12) erzeugte Energie zumindest teilweise dem Speicherelement (38) zum Laden zuzuführen.

2. Steuerungsvorrichtung nach Anspruch 1, wobei die Schalteinrichtung (34) eine Brückenschaltung (40) mit zumindest zwei Teilbrücken mit jeweils zwei Schaltelementen (Q1-Q4) aufweist, die so angeordnet sind, dass jeweils zwei in Reihe liegende Schaltelemente eine Brücke zwischen einem ersten Anschlusspunkt (AP1) und einem zweiten Anschlusspunkt (AP2) bilden, wobei der elektrische Motor an den mittleren Knotenpunkten (KP1, KP2) der Brücken anschließbar ist, und wobei die oberen Schaltelementen (Q1, Q3) die Knotenpunkte mit dem ersten Anschlusspunkt verbinden und die unteren Schaltelementen (Q2, Q4) die Knotenpunkte mit dem zweiten Anschlusspunkt verbinden.

3. Steuerungsvorrichtung nach Anspruch 2, wobei die Schaltelemente als MOSFETs ausgebildet sind und parallel zu jedem Schaltelement eine Freilaufdiode vorgesehen ist.

4. Steuerungsvorrichtung nach Anspruch 2 oder 3, wobei die Brückenschaltung zwei Teilbrücken aufweist und eine H-Brückenschaltung bildet.

5. Steuerungsvorrichtung nach Anspruch 4, wobei die Schaltelemente im Antriebsmodus so angesteuert sind, dass einer der beiden Knotenpunkte mit dem ersten Anschlusspunkt (AP1) und der andere der beiden Knotenpunkte mit dem zweiten Anschlusspunkt (AP2) verbunden ist, wobei zwischen am ersten Anschlusspunkt und dem zweiten Anschlusspunkt eine Motorspannung (Vm) liegt.

6. Steuerungsvorrichtung nach Anspruch 5, wobei die Steuereinheit ausgelegt ist, die Schaltelemente so anzusteuern, dass zwischen den Knotenpunkten eine durch Pulsweitenmodulation steuerbare Motorspannung anliegt, so dass die Drehzahl des elektrischen Motors einstellbar ist.

7. Steuerungsvorrichtung nach einem der vorherigen Ansprüche 4 bis 6, wobei die Schaltelemente im Generatormodus so angesteuert sind, dass -abhängig von der Drehrichtung- einer der beiden Knotenpunkte mit dem ersten Anschlusspunkt und der andere Knotenpunkt mit dem zweien Anschlusspunkt verbunden sind.

8. Steuerungsvorrichtung nach einem der Ansprüche 4 bis 7, wobei die Schaltelemente im Generatormodus so angesteuert sind, dass -abhängig von der Drehrichtung des elektrischen Motors- beide Knotenpunkte mit dem ersten Anschlusspunkt (AP1) oder dem zweiten Anschlusspunkt (AP2) verbunden sind.

9. Steuerungsvorrichtung nach Anspruch 6 oder 7, wobei die Steuerungseinheit ausgelegt ist, die Schaltelemente (Q1-Q4) so anzusteuern, dass die Bremsung des elektrischen Motors im Generatormodus durch Pulsweitenmodulation steuerbar ist.

10. Steuerungsvorrichtung nach einem der vorherigen Ansprüche, wobei eine elektrische Verbindung zwischen dem ersten Anschlusspunkt (AP1) und der Speichereinrichtung (36) vorgesehen ist, um das Speicherelement (38) über die am ersten Anschlusspunkt (AP1) anliegende Spannung zu laden.

11. Steuerungsvorrichtung nach Anspruch 10, wobei die Speichereinrichtung ein erstes Schaltelement (S1) aufweist, das ausgelegt ist, das Laden des Speicherelements zu steuern, wobei das Schaltelement (S1) durch die Steuereinheit (32) steuerbar ist, vorzugsweise
wobei die Speichereinrichtung (36) ein zweites Schaltelement (S2) aufweist, dass steuerbar über die Steuereinheit (32) diese mit Energie versorgt.

12. Steuerungsvorrichtung nach einem der vorhergehenden Ansprüche, wobei das Speicherelement (38) eine wiederaufladbare Batterie oder ein Kondensator ist.

13. Verfahren zum Steuern eines elektromechanischen Antriebs zum Betätigen eines Öffnungselements, insbesondere eines Gebäudes, mit
Ansteuern einer Schalteinrichtung, um einen elektrischen Motor des elektromechanischen Antriebs in einen Antriebsmodus mit Energie zu versorgen,
Ansteuern der Schalteinrichtung, um den elektrische Motor in einem Generatormodus zur Energierückgewinnung und/oder Bremsung zu betreiben, wobei die dabei vom elektrischen Motor erzeugte Energie zumindest teilweise einem Speicherelement zum Laden zugeführt wird.

14. Verfahren nach Anspruch 13, wobei
die Schalteinrichtung eine Brückenschaltung mit zumindest zwei Teilbrücken aufweist; und/oder
die Ansteuerung so erfolgt, dass durch eine Pulsweitenmodulation im Antriebsmodus die Versorgungsspannung und/oder im Generatormodus die Bremsung steuerbar ist; und/oder
die im Speicherelement gespeicherte Energie einer Steuereinheit zugeführt wird, um die Ansteuerung der Schalteinrichtung auch bei Wegfall einer Energieversorgung im Notfallbetrieb aufrechtzuerhalten.

15. Elektromechanischer Antrieb zum Betätigen eines Öffnungselements, insbesondere eines Gebäudes, mit einer Steuerungsvorrichtung (30) nach einem der Ansprüche 1 bis 13, und einem elektrischen Motor (12), der über die Steuerungsvorrichtung in einem Antriebsmodus oder einem Generatormodus betreibbar ist.
